# EUROPÄISCHE PATENTSCHRIFT

(11) **EP 2 554 813 B1**
(45) Veröffentlichungstag und Bekanntmachung des Hinweises auf die Patenterteilung: **09.07.2014**
(21) Anmeldenummer: 12007406.7
(22) Anmeldetag: 21.09.2011
(51) Int. Cl.: F01N 3/20, B01D 35/027, F02M 37/10, F02M 37/22, B60K 15/077

(54) **Flüssigkeitsbehälter, insbesondere für eine wässrige Harnstofflösung**
Liquid reservoir, in particular for an aqueous urea solution
Réservoir de liquide, en particulier pour une solution d'urée aqueuse

(30) Priorität: 12.11.2010 DE 102010051072
(43) Veröffentlichungstag der Anmeldung: 06.02.2013
(62) Teilanmeldung aus: 11007663.5
(73) Patentinhaber: Kautex Textron GmbH & Co. KG, 53229 Bonn (DE)
(72) Erfinder: Treudt, Volker, 51570 Windeck (DE)
(74) Vertreter: Kierdorf Ritschel

(56) Entgegenhaltungen:
- EP-A1- 0 798 457
- EP-A2- 1 510 392
- WO-A1-2010/053045
- WO-A2-2010/119116
- DE-A1- 19 644 464

## Beschreibung

Die Erfindung betrifft Flüssigkeitsbehälter, insbesondere für eine wässrige Harnstofflösung.

In der Fahrzeugtechnik wird vermehrt das SCR-Verfahren (Selectiv Catalytic Reduction) angewendet, um bei Dieselfahrzeugen die Stickoxydemission zu senken. Das für die SCR-Reaktion benötigte Ammoniak wird nicht direkt verwendet, sondern in Form einer 32,5%igen wässrigen Harnstofflösung gemäß DIN 700 70. Diese wässrige Harnstofflösung wird von dem SCR-Katalysator in dem Abgasstrang, zum Beispiel mittels einer Dosierpumpe oder eines Injektors, eingespritzt. Aus der Harnstoff-Wasser-Lösung entstehen durch eine Hydrolysereaktion Ammoniak und CO₂. Das so erzeuge Ammoniak kann mit den Stickoxyden im Abgas reagieren und so die Stickoxydemission senken. Die Menge des eingespritzten Harnstoffs ist von der Stickoxydemission des Motors und somit von der momentanen Drehzahl und dem Drehmoment des Motors abhängig. Der Wirkungsgrad des SCR-Katalysators ist dabei davon abhängig, dass die wässrige Harnstofflösung im richtigen Verhältnis zur Stickoxydemission des Motors eingespritzt wird. Bei einer zu geringen Einspritzung von wässriger Harnstofflösung sinkt der Wirkungsgrad der Stickoxydminderung. Wird zuviel Harnstoff eingespritzt, so kann das daraus gebildete Ammoniak nicht mit Stickoxyden reagieren und in die Umgebung gelangen. Es ist somit eine möglichst genaue Förderung von wässriger Harnstofflösung von dem Flüssigkeitsbehälter für die wässrige Harnstofflösung zu dem SCR-Katalysator notwendig, vorzugsweise im Bereich von Millilitern.

Aus der EP 1 510 392 A2 ist ein Kraftstoffbehälter für ein Kraftfahrzeug mit einer Kraftstofffördereinheit zum Fördern von Kraftstoff bekannt. Die Kraftstofffördereinheit umfasst ein am Boden des Kraftstoffbehälters angeordnetes Filterelement, wobei das Filterelement ein beutelförmiges Filtergewebe mit vorgesehener Maschenweite aufweist. Das beutelförmige Filtergewebe ist in mehreren, in der vorgesehenen Einbaulage des Kraftstoffbehälters tief gelegenen Bereichen des Bodens angeordnet, wobei die Maschenweite derart bemessen ist, dass das benetzte Filtergewebe durchlässig für Kraftstoffe und undurchlässig für Luft ist. Gemäß einer bevorzugten Ausführungsform gemäß der EP 1 510 392 A2 erstreckt sich das Filtergewebe im Wesentlichen über den gesamten Bereich des Bodens des Kraftstoffbehälters. In einer alternativen Ausführungsform sind mehrere einzelne Filtergewebe in den vorgesehenen Bereichen des Bodens des Kraftstoffbehälters verteilt angeordnet. In dem sich über den gesamten Bereich des Bodens des Kraftstoffbehälters erstreckenden Filtergewebes und den Flüssigkeitsleitungen zu der Kraftstoffpumpe befindet sich zu Beginn der Förderung jedoch Luft, die vor einer Förderung von Kraftstoff zuerst abgeführt werden muss. Bei mehreren Filtergeweben, die über den Boden des Kraftstoffbehälters verteilt angeordnet sind, besteht das Problem, dass sämtliche Flüssigkeitsleitungen gleichmäßig entlüftet werden müssen, um nachfolgend eine gleichmäßige Förderung von Kraftstoff zu gewährleisten.

Das Dokument DE 196 19 992 A1 offenbart ein Kraftstoff-Fördermodul mit einer Kraftstoffpumpe, einem Kraftstoff-Grob- und einem Kraftstoff-Feinfilter, wobei die Kraftstoffpumpe mit dem vorgeschalteten Kraftstoff-Grobfilter von einem auf dem Boden eines Kraftstofftanks angeordneten Speichertopf umgeben ist. Die Wandung des Speichertopfs ist zumindest bereichsweise doppelwandig ausgebildet. In dem vollständig umschlossenen Zwischenraum der Wandung ist der Kraftstoff-Feinfilter angeordnet. Dabei hat der Zwischenraum zum einen im Feinfiltereingangsbereich einen mit dem Druckanschluss der Kraftstoffpumpe verbundenen Zuflussanschluss und zum anderen weist er im Feinfilterausgangsbereich einen Abflussanschluss auf.

Die WO 2010/053045 A1 offenbart einen Kraftstofftank, der eine Kraftstoffpumpe umfasst, die über eine Siphonleitung über zwei freie Enden mit Kraftstoff versorgt wird. An den jeweiligen freien Enden der Siphon-Leitung sind jeweils Schaltventile vorgesehen, die sich in einem geöffneten Zustand befinden, wenn sich die jeweiligen freien Enden im Kraftstoff befinden, und die in einen geschlossenen Zustand überführt werden, wenn sich das entsprechende freie Ende nicht im Kraftstoff befindet. Die Schaltventile sind über eine Flüssigkeitsleitung mit einem Sammelpunkt verbunden, der über eine Flüssigkeitssammelleitung mit der Kraftstoffpumpe verbunden ist. Der Sammelpunkt ist dabei in Einbaulage der höchste Punkt in der Flüssigkeitsverbindung zwischen den Schaltventilen und der Kraftstoffpumpe.

Die EP 1 510 392 A2 offenbart einen Kraftstoffbehälter für ein Kraftfahrzeug. Zur Vermeidung der Notwendigkeit eines Schwalltopfes umfasst eine im Kraftstoffbehälter angeordnete Kraftstoff-Fördereinheit ein sich über den gesamten Bereich eines Bodens des Kraftstoffbehälters erstreckendes, beutelförmiges Filtergewebe. Das Material und die Maschenweite des Filtergewebes sind dabei derart bemessen, dass bei benetztem Filtergewebe Kraftstoff durchgelassen und ein Eindringen von Luft verhindert wird. Die Kraftstofffördereinheit benötigt keine Saugstrahlpumpen zur Versorgung einer Kraftstoffpumpe mit Kraftstoff aus verschiedenen Bereichen des Kraftstoffbehälters.

Der Erfindung liegt daher die Aufgabe zugrunde, die Förderung einer Flüssigkeit aus einem Flüssigkeitsbehälter zu einem nachfolgenden Verbraucher, beispielsweise einem SCR-Katalysator, hinsichtlich der Genauigkeit der geförderten Flüssigkeitsmenge zu verbessern.

Ein Flüssigkeitsbehälter, der nicht zum Gegenstand der Erfindung gehört, insbesondere für eine wässrige Harnstofflösung, umfasst einen in Einbaulage am Boden des Flüssigkeitsbehälters angeordneten Zwischenspeicher, eine Flüssigkeitsfördereinheit, wenigstens ein, vorzugsweise mehrere, in Einbaulage am Boden außerhalb des Zwischenspeichers angeordnete erste Filterelemente, die jeweils über eine Flüssigkeitsleitung mit der Flüssigkeitsfördereinheit verbunden sind, wobei die ersten Filterelemente so ausgebildet sind, dass das Filtergewebe der ersten Filterelemente durchlässig für die im Flüssigkeitsbehälter befindliche Flüssigkeit und undurchlässig für Luft ist, wobei zwischen dem Inneren des Zwischenspeichers und der Flüssigkeitsfördereinheit ein zweites Filterelement angeordnet ist, welches so ausgebildet ist, dass das Filtergewebe des zweiten Filterelements durchlässig für die im Flüssigkeitsbehälter befindliche Flüssigkeit und undurchlässig für Luft ist, wobei der Durchbrechdruck des zweiten Filterelements, bei welchem durch das Filterelement Luft gefördert wird, größer ist als der Durchbrechdruck der ersten Filterelemente, weiterhin umfassend ein erstes Ventil zwischen der Flüssigkeitsfördereinheit und den ersten Filterelementen, wobei der Öffnungsdruck des ersten Ventils kleiner ist als der Durchbrechdruck des zweiten Filterelements.

Der Öffnungsdruck eines Ventils im Sinne der Erfindung ist der Druck, bei welchem das Ventil von dem geschlossen Zustand in den geöffneten Zustand wechselt.

Der Durchbrechdruck eines Filterelements im Sinne der Erfindung ist der Druck, bei welchem durch das Filterelement Luft gefördert wird.

Der Öffnungsdruck des ersten Ventils kann von dem Durchbrechdruck der ersten Filterelemente beeinflusst werden, da diese in Strömungsrichtung in Reihe geschaltet sind. Dass der Öffnungsdruck des ersten Ventils kleiner ist als der Durchbrechdruck des zweiten Filterelements ist so zu verstehen, dass die Reihenschaltung aus erstem Filterelement und erstem Ventil insgesamt einen Öffnungsdruck aufweist, der kleiner ist als der Durchbrechdruck des zweiten , Filterelements.

Durch das erste Ventil wird sichergestellt, dass zuerst die Flüssigkeit aus dem Zwischenspeicher über die Flüssigkeitsfördereinheit zu dem Verbraucher gefördert wird. Ist der Zwischenspeicher vollkommen entleert, sperrt das zweite Filterelement innerhalb des Zwischenspeichers bis zum seinem Durchbrechdruck, bevor Luft über das zweite Filterelement angesaugt wird. Vor Erreichen des Durchbrechdrucks des zweiten Filterelements öffnet sich das erste Ventil und nachfolgend wird Flüssigkeit über die ersten Filterelemente gefördert, wobei die Lage der ersten Filterelemente am Boden des Flüssigkeitsbehälters für eine nahezu vollkommene Restentleerung des Flüssigkeitsbehälters sorgen. Der erfindungsgemäße Flüssigkeitsbehälter hat den Vorteil, dass zuerst die Flüssigkeit aus dem Zwischenspeicher abgefördert wird, wobei die Flüssigkeitsleitungen sehr kurz sind.

Vorzugsweise ist die Flüssigkeitsfördereinheit innerhalb des Zwischenspeichers angeordnet.

Nach einer Variante, der nicht zum Gegenstand der Erfindung gehört, umfasst das zweite Filterelement wenigstens zwei in Förderrichtung hintereinander angeordnete Filtergewebe, wodurch sich der Durchbrechdruck des zweiten Filterelements erhöht. Durch die Anzahl der hintereinander angeordneten Filtergewebe innerhalb des zweiten Filterelements lässt sich der Durchbrechdruck des zweiten Filterelements auf einfache Art und Weise anpassen. Da der Durchbrechdruck von der Maschenweite des Filtergewebes des zweiten Filterelements abhängt und Filtergewebe nur mit einer Maschenweite in einem bestimmten vorgegebenen Bereich hergestellt werden können, ist eine kaskadenartige Anordnung von Filterelementen eine Möglichkeit den Durchbrechdruck zu erhöhen.

Nach einer bevorzugten Variante, der nicht zum Gegenstand der Erfindung gehört, entsprechen die wenigstens zwei Filtergewebe des zweiten Filterelements dem Filtergewebe des ersten Filterelements. Somit wird innerhalb des erfindungsgemäßen Flüssigkeitsbehälters nur eine einzige Art von Filtergewebe verwendet, wodurch sich die Herstellungskosten reduzieren lassen, da das Filtergewebe in einer größeren Stückzahl hergestellt bzw. eingekauft werden kann.

Nach einer weiteren Variante, der nicht zum Gegenstand der Erfindung gehört, sind die ersten Filterelemente jeweils über eine Flüssigkeitsleitung mit einem Sammelpunkt verbunden und der Sammelpunkt ist über eine Flüssigkeitssammelleitung mit der Flüssigkeitsfördereinheit verbunden. Durch die Flüssigkeitssammelleitung wird die Luft innerhalb des Leitungssystems zwischen den ersten Filterelementen und der Flüssigkeitsfördereinheit reduziert, wodurch sich die Fördergenauigkeit von Flüssigkeit aus dem erfindungsgemäßen Flüssigkeitsbehälter zu einem nachfolgenden Verbraucher deutlich erhöht.

Nach einer bevorzugten Variante, der nicht zum Gegenstand der Erfindung gehört, ist der Sammelpunkt der in Einbaulage höchste Punkt in der Flüssigkeitsverbindung zwischen den ersten Filterelementen und der Flüssigkeitsfördereinheit. Durch die Kombination von Sammelpunkt und der Anordnung des Sammelpunkts am in Einbaulage höchsten Punkt in der Flüssigkeitsverbindung zwischen den ersten Filterelementen und der Flüssigkeitsfördereinheit wird gewährleistet, dass, sobald Flüssigkeit von einem ersten Filterelement über die Flüssigkeitsfördereinheit gefördert wird, kein Druckverlust in den Flüssigkeitsleitungen zwischen dem Sammelpunkt und den anderen ersten Filterelementen entsteht, wodurch sich die entsprechende Leitung zwischen erstem Filterelement und Sammelpunkt wieder mit Luft füllen könnte. Zweckmäßigerweise ist die Flüssigkeitsfördereinheit in Einbaulage unterhalb des Sammelpunkts angeordnet.

Nach einer zweckmäßigen Variante, der nicht zum Gegenstand der Erfindung gehört, ist das erste Ventil in der Flüssigkeitssammelleitung angeordnet. Somit muss nicht für jedes erste Filterelement ein separates erstes Ventil bereitgestellt werden, sondern ein einziges erstes Ventil für alle ersten Filterelemente.

Gemäß einer weiteren Variante, der nicht zum Gegenstand der Erfindung gehört, umfasst der Zwischenspeicher ein Heizelement, um die im Zwischenspeicher befindliche Flüssigkeit abzuschmelzen bzw. zu erhitzen. Zusätzlich oder alternativ kann der Zwischenspeicher als Schwalltopf ausgebildet sein. Das Heizelement gewährleistet, dass zu jedem Zeitpunkt ausreichend Flüssigkeit zur Förderung zur Verfügung steht. Insbesondere bei wässriger Harnstofflösung ist das Heizelement vorteilhaft, da der Gefrierpunkt von wässriger Harnstofflösung bei ungefähr -11 °C liegt und somit im Einsatzbereich von Kraftfahrzeugen. Der Schwalltopf bietet den Vorteil, dass ein Schwappen der Flüssigkeit innerhalb des Flüssigkeitsbehälters zumindest teilweise unterbunden wird, wodurch eine bessere Versorgung der Flüssigkeitsfördereinrichtung mit Flüssigkeit gewährleistet ist. In einer weiteren Variante, der nicht zum Gegenstand der Erfindung gehört, umfasst Flüssigkeitsbehälter weiterhin einen außerhalb des Flüssigkeitsbehälters angeordneten zweiten Flüssigkeitsbehälter mit wenigstens einem in Einbaulage am Boden angeordneten dritten Filterelement, wobei der zweite Flüssigkeitsbehälter über das wenigstens eine dritte Filterelement und eine Flüssigkeitsverbindungsleitung mit der Flüssigkeitsfördereinheit verbunden ist. Eine derartige Ausgestaltung dient zur Anpassung des erfindungsgemäßen Flüssigkeitsbehälters an die Raumverhältnisse, in welchem der Flüssigkeitsbehälter eingebaut werden soll. Beispielsweise sind die Raumverhältnisse in einem Kraftfahrzeug beschränkt, da möglichst viel von dem vorhandenen Platz für den Innenraum zur Verfügung gestellt werden soll. Somit kann es vorteilhaft sein, den Flüssigkeitsbehälter mehrteilig auszubilden und die einzelnen Flüssigkeitsbehälter an verschiedenen Orten des Kraftfahrzeuges zu platzieren. Ein weiterer Vorteil einer derartigen Ausgestaltung ist, dass die Flüssigkeitsverbindungsleitung zwischen dem erstem Flüssigkeitsbehälter und dem zweiten Flüssigkeitsbehälter keine Flüssigkeitsfördereinheit benötigt, unabhängig von der Lage des zweiten Flüssigkeitsbehälters. So kann der zweite Flüssigkeitsbehälter beispielsweise in Einbaulage unterhalb oder oberhalb des ersten Flüssigkeitsbehälters angeordnet werden, ohne das eine zusätzlich Flüssigkeitsfördereinheit benötigt wird.

Gemäß einer bevorzugten Variante, der nicht zum Gegenstand der Erfindung gehört, umfasst der Flüssigkeitsbehälter ein zweites Ventil zwischen dem zweiten Filterelement und der Flüssigkeitsfördereinheit und ein drittes Ventil zwischen dem dritten Filterelement und der Flüssigkeitsfördereinheit, wobei der Öffnungsdruck des zweiten Ventils kleiner ist als der Öffnungsdruck des ersten Ventils und der Öffnungsdruck des dritten Ventils kleiner ist als der Öffnungsdruck des zweiten Ventils. Durch eine derartige Ausgestaltung wird gewährleistet, dass zuerst die Flüssigkeit aus dem zweiten Flüssigkeitsbehälter gefördert wird, nachfolgend aus dem Zwischenspeicher des ersten Flüssigkeitsbehälters und anschließend über die ersten Filterelemente die im ersten Flüssigkeitsbehälter befindliche Restflüssigkeit.

Gemäß einer besonders bevorzugten Variante, der nicht zum Gegenstand der Erfindung gehört, umfasst der Flüssigkeitsbehälter ein viertes Ventil zwischen der Flüssigkeitsfördereinheit und dem Innenraum des Flüssigkeitsbehälter um einen Rückfluss von Flüssigkeit von der Flüssigkeitsfördereinheit in den Flüssigkeitsbehälter zu ermöglich, vorzugsweise in den Flüssigkeitsbehälter welcher ein Heizelement aufweist. Nach einer zweckmäßigen Variante ist das vierte Ventil zwischen der Flüssigkeitsfördereinheit und dem Zwischenspeicher angeordnet. Somit wird beim Rückspülen der Leitung zwischen Flüssigkeitsfördereinheit und Verbraucher gewährleistet, dass die Flüssigkeit in den bereits aufgeheizten Flüssigkeitsbehälter zurückgeführt wird, wodurch ein erneutes Einfrieren der Flüssigkeit verhindert wird. Zweckmäßigerweise ist das vierte Ventil als Einwegeventil ausgebildet, beispielsweise als Rückschlagventil, um eine Förderung von Flüssigkeit aus dem Flüssigkeitsbehälter zu der Flüssigkeitsfördereinheit zu verhindern.

Gemäß einer zweckmäßigen Variante, der nicht zum Gegenstand der Erfindung gehört, umfasst der zweite Flüssigkeitsbehälter einen zweiten Sammelpunkt, vorzugsweise ist der zweite Sammelpunkt der in Einbaulage höchste Punkt der Flüssigkeitsleitung innerhalb des zweiten Flüssigkäitsbehälters.

Gemäß einer weiteren Variante, der nicht zum Gegenstand der Erfindung gehört, ist das zweite Filterelement in Einbaulage am Boden des Zwischenspeichers angeordnet. Somit wird eine nahezu vollkommene Entleerung des Zwischenspeichers gewährleistet, bevor Flüssigkeit über die ersten Filterelemente gefördert wird.

Die Aufgabe der vorliegenden Erfindung wird gelöst durch einen Flüssigkeitsbehälter gemäß dem Gegenstand des Anspruchs 1, insbesondere für eine wässrige Harnstofflösung, umfassend eine innerhalb des Flüssigkeitsbehälters angeordnete Flüssigkeitsfördereinheit, wenigstens zwei in Einbaulage am Boden des Flüssigkeitsbehälters angeordnete erste Filterelemente, wobei die ersten Filterelemente jeweils über eine Flüssigkeitsleitung mit einem Sammelpunkt verbunden sind und der Sammelpunkt über eine Flüssigkeitssammelleitung mit der Flüssigkeitsfördereinheit verbunden ist, wobei der Sammelpunkt der in Einbaulage höchste Punkt in der Flüssigkeitsverbindung zwischen den ersten Filterelementen und der Flüssigkeitsfördereinheit ist.

Durch eine derartige Ausgestaltung wird gewährleistet, dass, sobald Flüssigkeit über ein erstes Filterelement von der Flüssigkeitsfördereinheit gefördert wird, die Druckverhältnisse zwischen den anderen ersten Filterelementen und dem Sammelpunkt unverändert bleiben, insbesondere, dass der Flüssigkeitspegel zwischen den entsprechenden ersten Filterelementen und dem Sammelpunkt nicht absinkt. Dies hat den Vorteil, dass, sobald von dem einen ersten Filterelement keine Flüssigkeit mehr gefördert werden kann, die Flüssigkeitsleitungen zwischen den anderen ersten Filterelementen und dem Sammelpunkt wenigstens teilweise, vorzugsweise komplett, mit Flüssigkeit gefüllt sind. Vorteilhafte Ausführungsformen sind Gegenstand der abhängigen Ansprüche.

Gemäß der Erfindung umfasst der Flüssigkeitsbehälter ein außerhalb des ersten Flüssigkeitsbehälters angeordneten zweiten Flüssigkeitsbehälter mit wenigstens einem in Einbaulage am Boden angeordneten Filterelement, wobei der zweite Flüssigkeitsbehälter über das wenigstens eine dritte Filterelement und eine Flüssigkeitsverbindungsleitung mit der Flüssigkeitsfördereinheit verbunden ist. Eine derartige mehrteilige Ausgestaltung des erfindungsgemäßen Flüssigkeitsbehälters erlaubt eine bessere Anpassung an die Raumverhältnisse am Montageort, beispielsweise innerhalb eines Kraftfahrzeuges. Ein weiterer Vorteil einer derartigen Ausgestaltung ist, dass zwischen dem erstem Flüssigkeitsbehälter und dem zweiten Flüssigkeitsbehälter keine Flüssigkeitsfördereinheit benötigt wird, unabhängig von der Lage des zweiten Flüssigkeitsbehälters. So kann der zweite Flüssigkeitsbehälter beispielsweise in Einbaulage unterhalb oder oberhalb des ersten Flüssigkeitsbehälters angeordnet werden, ohne das eine zusätzlich Flüssigkeitsfördereinheit benötigt wird.

In einer besonders bevorzugten Variante der Erfindung umfasst der Flüssigkeitsbehälter ein erstes Ventil zwischen den ersten Filterelementen und der Flüssigkeitsfördereinheit und ein drittes Ventil zwischen den dritten Filterelementen und der Flüssigkeitsfördereinheit, wobei der Öffnungsdruck des dritten Ventils kleiner ist als der Öffnungsdruck des ersten Ventils. Somit ist gewährleistet, dass zuerst die Flüssigkeit aus dem zweiten Flüssigkeitsbehälter über die Flüssigkeitsfördereinheit gefördert wird, bevor die Flüssigkeit aus dem Flüssigkeitsbehälter über die ersten Filterelemente gefördert wird.

Nach einer zweckmäßigen Variante, die nicht zum Gegenstand der Erfindung gehört, umfasst die Flüssigkeitsverbindungsleitung ein Rückschlagventil, um einen Rückfluss von Flüssigkeit von der Flüssigkeitsfördereinheit in den zweiten Flüssigkeitsbehälter zu verhindern. Dies ist insbesondere vorteilhaft, wenn Flüssigkeit aus der Leitung zwischen Flüssigkeitsfördereinheit und Verbraucher rückgespült wird.

Gemäß einer weiteren zweckmäßigen Variante der Erfindung umfasst der zweite Flüssigkeitsbehälter einen zweiten Sammelpunkt, vorzugsweise ist der zweite Sammelpunkt der in Einbaulage höchste Punkt der Flüssigkeitsleitung innerhalb des zweiten Flüssigkeitsbehälters. Somit sind die dritten Filterelemente innerhalb des zweiten Flüssigkeitsbehälters über Steigleitungen mit dem Sammelpunkt innerhalb des zweiten Flüssigkeitsbehälters verbunden und der zweite Sammelpunkt ist über die Flüssigkeitsverbindungsleitung mit der Flüssigkeitsfördereinheit verbunden. Die Vorteile einer derartigen Ausgestaltung entsprechen denen des Sammelpunkts innerhalb des ersten Flüssigkeitsbehälters.

Zweckmäßigerweise sind die ersten Filterelemente und/oder die dritten Filterelemente in Einbaulage an den niedrigsten Punkten des Flüssigkeitsbehälters bzw. des zweiten Flüssigkeitsbehälters angeordnet. Dadurch wird eine vollkommene Entleerung der Flüssigkeitsbehälter ermöglicht.

In einer bevorzugten Variante der Erfindung ist der Durchbrechdruck der ersten Filterelemente und/oder der dritten Filterelemente gleich groß. Es findet somit erfindungsgemäß keine Selektion zwischen den einzelnen ersten Filterelementen bzw. dritten Filterelementen untereinander statt.

Zweckmäßigerweise ist der Flüssigkeitsbehälter im Blasformverfahren oder Spritzgussverfahren hergestellt. Dies verringert die Herstellungskosten bei einer gleichzeitigen hohen Lebensdauer.

Nach einer weiteren zweckmäßigen Variante die nicht zum Gegenstand der Erfindung gehört, sind das erste Ventil, das zweite Ventil, das dritte Ventil und/oder das vierte Ventil als Einwegeventil ausgebildet, beispielsweise als Rückschlagventil.

Nachfolgend wird die Erfindung anhand einiger in den Figuren dargestellten Ausführungsbeispielen näher erläutert. Es zeigen:
- Figur 1:: eine Schnittansicht einen Flüssigkeitsbehälter nicht gemäß der Erfindung,
- Figur 2:: eine Schnittansicht einen Flüssigkeitsbehälter nicht gemäß der Erfindung,
- Figur 3:: eine Schnittansicht eines Flüssigkeitsbehälters gemäß der Erfindung, und
- Figur 4:: eine Schnittansicht eines weiteren Flüssigkeitsbehälters nicht gemäß der Erfindung.

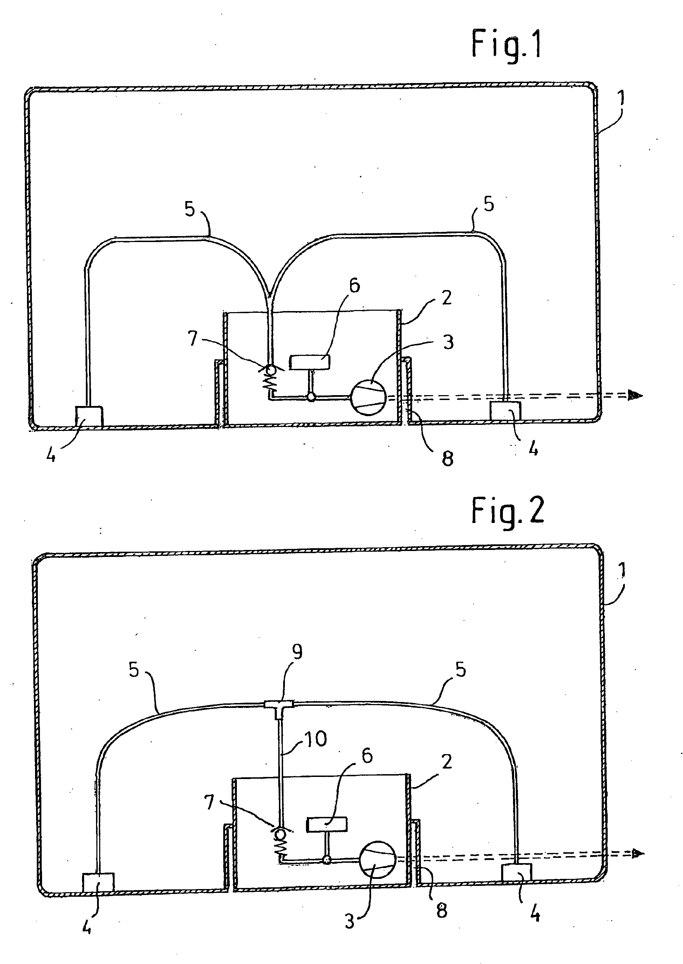

Figur 1 zeigt eine Schnittansicht eines erfindungsgemäßen Flüssigkeitsbehälters 1, insbesondere für eine wässrige Harnstofflösung. Der Flüssigkeitsbehälter 1 umfasst dabei einen in Einbaulage am Boden des Flüssigkeitsbehälters 1 angeordneten Zwischenspeicher 2, eine innerhalb des Zwischenspeichers 2 angeordnete Flüssigkeitsfördereinheit 3, und zwei in Einbaulage am Boden außerhalb des Zwischenspeichers 2 angeordnete erste Filterelemente 4, die jeweils über eine Flüssigkeitsleitung 5 mit der Flüssigkeitsfördereinheit 3 verbunden sind. Die ersten Filterelemente 4 sind so ausgebildet, dass das Filtergewebe der ersten Filterelemente 4 durchlässig für die im Flüssigkeitsbehälter 1 befindliche Flüssigkeit und undurchlässig für Luft sind. Weiterhin ist zwischen dem Inneren des Zwischenspeichers 2 und der Flüssigkeitsfördereinheit 3 ein zweites Filterelement 6 angeordnet, welches so ausgebildet ist, dass das Filtergewebe des zweiten Filterelements 6 durchlässig für die im Flüssigkeitsbehälter befindliche Flüssigkeit und undurchlässig für Luft ist. Der Durchbrechdruck des zweiten Filterelements 6, bei welchem durch das Filterelement Luft gefördert wird, ist größer als der Durchbrechdruck der ersten Filterelemente 4. Der Flüssigkeitsbehälter 1 umfasst weiterhin ein erstes Ventil 7 zwischen der Flüssigkeitsfördereinheit 3 und den ersten Filterelementen 4, wobei der Öffnungsdruck des ersten Ventils 7 kleiner ist als der Durchbrechdruck des zweiten Filterelements 6.

Der Öffnungsdruck des ersten Ventils 7 kann von dem Durchbrechdruck der ersten Filterelemente 4 beeinflusst werden, da diese in Strömungsrichtung in Reihe geschaltet sind. Dass der Öffnungsdruck des ersten Ventils 7 kleiner ist als der Durchbrechdruck des zweiten Filterelements 6 ist so zu verstehen, dass die Reihenschaltung aus erstem Filterelement 4 und erstem Ventil 7 insgesamt einen Öffnungsdruck aufweist, der kleiner ist als der Durchbrechdruck des zweiten Filterelements.

Beispielsweise weist das zweite Filterelement 6 einen Durchbrechdruck von 100 mbar auf, die ersten Filterelemente 4 einen Durchbrechdruck von 50 mbar und das erste Ventil einen Öffnungsdruck von 25 mbar.

Ein derart ausgestalteter Flüssigkeitsbehälter 1 gewährleistet, dass zuerst die Flüssigkeit aus dem Zwischenspeicher 2 mittels der Flüssigkeitsfördereinheit 3 gefördert wird. Nachfolgend, wenn der Zwischenspeicher 2 keine Flüssigkeit mehr enthält, öffnet vor einem Durchbruch des zweiten Filterelements 6 das erste Ventil 7 und die Flüssigkeit wird über die ersten Filterelemente 4 und die Flüssigkeitsleitungen 5 von verschiedenen Punkten am Boden des Flüssigkeitsbehälters 1 abgesaugt, bis dieser vollständig entleert ist.

Zur Erreichung des Durchbrechdrucks des zweiten Filterelements 6 kann dieses wenigstens zwei in Förderrichtung hintereinander angeordnete Filtergewebe umfassen. Vorzugsweise entsprechen diese wenigstens zwei Filtergewebe des zweiten Filterelements 6 dem Filtergewebe des ersten Filterelements 4.

Der Zwischenspeicher 2 umfasst ein Heizelement 8, um die im Zwischenspeicher 2 befindliche Flüssigkeit zu erhitzen bzw. nach dem Einfrieren abzuschmelzen.

Weiterhin ist der Zwischenspeicher 2 als Schwalltopf ausgebildet, um eine Bewegung der Flüssigkeit während einer Bewegung des Flüssigkeitsbehälters, beispielsweise beim Einsetzen in ein Kraftfahrzeug, einzuschränken bzw. sicherzustellen, dass das zweite Filterelement möglichst lange von Flüssigkeit umgeben ist.

Weiterhin kann das zweite Filterelement 6 am in Einbaulage Boden des Zwischenspeichers angeordnet werden, um eine möglichst vollständige Restentleerung des Zwischenspeichers zu gewährleisten.

Entsprechend sind die ersten Filterelemente 4 in Einbaulage an den niedrigsten Punkten des Flüssigkeitsbehälters 1 angeordnet.

Der Durchbrechdruck der ersten Filterelemente 4 ist in dem dargestellten Ausführungsbeispiel gleich groß, um keine Selektion zwischen den beiden ersten Filterelementen 4 vorzunehmen.

Der in Figur 1 dargestellte Flüssigkeitsbehälter kann beispielsweise im Blasformverfahren oder im Spritzgussverfahren hergestellt werden und dient zum Transport von wässriger Harnstofflösung in einem Kraftfahrzeug, wobei die wässrige Harnstofflösung einem SCR-Katalysator zugeführt wird.

Der in Figur 2 dargestellte Flüssigkeitsbehälter 1 für eine wässrige Harnstofflösung umfasst einen in Einbaulage am Boden des Flüssigkeitsbehälters 1 angeordneten Zwischenspeicher 2, eine Flüssigkeitsfördereinheit 3, wenigstens zwei in Einbaulage am Boden außerhalb des Zwischenspeichers 2 angeordnete erste Filterelemente 4, die jeweils über eine Flüssigkeitsleitung 5 mit der Flüssigkeitsfördereinheit 3 verbunden sind, wobei die ersten Filterelemente 4 so ausgebildet sind, dass das Filtergewebe der ersten Filterelemente 4 durchlässig für die Flüssigkeitsbehälter 1 befindliche Flüssigkeit und undurchlässig für Luft ist. Zwischen dem Inneren des Zwischenspeichers 2 und der Flüssigkeitsfördereinheit 3 ist ein zweites Filterelement 6 angeordnet, welches so ausgebildet ist, dass das Filtergewebe des zweiten Filterelements 6 durchlässig für die im Flüssigkeitsbehälter befindliche Flüssigkeit und undurchlässig für Luft ist, wobei der Durchbrechdruck des zweiten Filterelements 6, bei welchem durch das Filterelement Luft gefördert wird, größer ist als der Durchbrechdruck der ersten Filterelemente 4. Zwischen der Flüssigkeitsfördereinheit 3 und den ersten Filterelementen 4 ist ein erstes Ventil 7 angeordnet, wobei der Öffnungsdruck des ersten Ventils 7 kleiner ist als der Durchbrechdruck des zweiten Filterelements 6.

Die ersten Filterelemente 4 sind jeweils über eine Flüssigkeitsleitung 5 mit einem Sammelpunkt 9 verbunden und der Sammelpunkt 9 ist über eine Flüssigkeitssammelleitung 10 mit der Flüssigkeitsfördereinheit 3 verbunden. Der Sammelpunkt 10 ist in Einbaulage am höchsten Punkt in der Flüssigkeitsverbindung zwischen den ersten Filterelementen 4 und der Flüssigkeitsfördereinheit 3 angeordnet. Eine derartige Anordnung hat den Vorteil, dass, sobald Flüssigkeit durch ein erstes Filterelement 4 und der zugehörigen Flüssigkeitsleitung 5 gefördert wird, der Flüssigkeitspegel in den anderen Flüssigkeitsleitungen 5 nicht abfällt, so dass nachfolgend durch diese Flüssigkeitsleitungen 5 schneller Flüssigkeit gefördert werden kann.

Wie der Figur 2 weiterhin entnommen werden kann, ist das erste Ventil 7 in der Flüssigkeitssammelleitung 10 angeordnet.

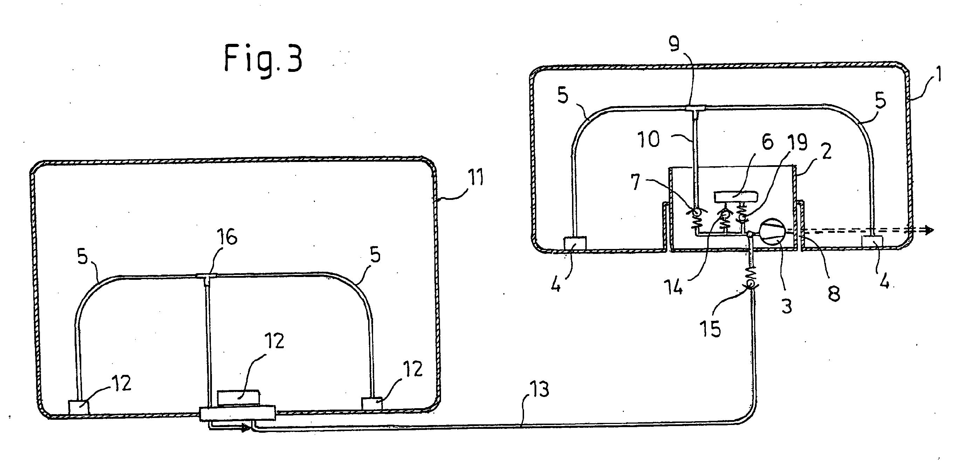

In Figur 3 ist ein Flüssigkeitsbehälter 1 gemäß Figur 2 dargestellt, welcher weiterhin einen außerhalb des Flüssigkeitsbehälters 1 angeordneten zweiten Flüssigkeitsbehälter 11 mit wenigstens einem in Einbaulage am Boden angeordneten dritten Filterelement 12, wobei der zweite Flüssigkeitsbehälter 11 über das wenigstens eine dritte Filterelement 12 und eine Flüssigkeitsverbindungsleitung 13 mit der Flüssigkeitsfördereinheit 3 verbunden ist.

Der Flüssigkeitsbehälter 1 wird dabei auch als Aktivbehälter bezeichnet, da er aktive Komponenten wie beispielweise die Flüssigkeitsfördereinheit 3 umfasst und der zweite Flüssigkeitsbehälter 11 wird als Passivbehälter bezeichnet, da dieser keine aktiven Komponenten enthält.

Eine zweiteilige Ausgestaltung der Flüssigkeitsbehälter 1, 11 hat mehrere Vorteile. Zum einen können die Behältnisse kleiner ausgebildet sein und somit besser an den am Montageort vorhandenen Raum angepasst werden. Zum anderen ist es ausreichend, wenn einer der beiden Behälter eine Heizvorrichtung 8 umfasst, um auch während niedriger Temperaturen ausreichend Flüssigkeit bereitzustellen. Die Flüssigkeit in einem kleineren Flüssigkeitsbehälter 1, 11 kann dabei schneller abgetaut werden als in einem großen Behältnis.

Der Flüssigkeitsbehälter 1 in Verbindung mit dem zweiten Flüssigkeitsbehälter 11 aus Figur 3 umfasst weiterhin ein zweites Ventil 14 zwischen dem zweiten Filterelement 6 und der Flüssigkeitsfördereinheit 3 und ein drittes Ventil 15 zwischen dem dritten Filterelement 12 und der Flüssigkeitsfördereinheit 3, wobei der Öffnungsdruck des zweiten Ventils 14 kleiner als der Öffnungsdruck des ersten Ventils 7 und der Öffnungsdruck des dritten Ventils 15 kleiner als der Öffnungsdruck des zweiten Ventils 14 ist. Durch eine derartige Ausgestaltung wird sichergestellt, dass vorrangig die Flüssigkeit aus dem zweiten Flüssigkeitsbehälter 11 verbraucht wird, bis dieser leer oder eingefroren ist. Nachfolgend wird die Flüssigkeit aus dem Zwischenspeicher 2 verbraucht, bis dieser ebenfalls leer ist und zuletzt wird die Restflüssigkeit aus dem Flüssigkeitsbehälter 1 über die ersten Filterelemente 4 und die Flüssigkeitsverbindung 5 verbraucht.

Die in Figur 3 dargestellte Ausführungsform hat gegenüber dem bekannten Stand der Technik den Vorteil, dass zwischen Aktivbehälter und Passivbehälter keine zusätzliche Flüssigkeitsfördereinheit benötigt wird.

In einer bevorzugten Variante umfasst der Flüssigkeitsbehälter 11 ein viertes Ventil 19 zwischen der Flüssigkeitsfördereinheit 3 und dem Innenraum des Zwischenspeichers 2, um einen Rückfluss von Flüssigkeit von der Flüssigkeitsfördereinheit 3 in den Zwischenspeicher 2 zu ermöglichen, beispielsweise während eines Rückspülens der Flüssigkeitsleitung zwischen Flüssigkeitsfördereinheit 3 und dem Verbraucher. Das vierte Ventil 19 ist als Einwegeventil in Form eines Rückschlagventils ausgebildet. Dies hat den Vorteil, dass die Flüssigkeit in den mittels des Heizelements 8 beheizten Zwischenspeichers 2 rückgespült wird, wodurch ein erneutes Einfrieren der Flüssigkeit verhindert bzw. verlangsamt wird. Das vierte Ventil 19 kann einstückig mit dem zweiten Ventil 14 ausgebildet sein. Die Leitung zwischen der Flüssigkeitsfördereinheit 3 und dem Verbraucher wird nach dem Abschalten des Verbrauchers rückgespült, um diese von der Flüssigkeit zu entleeren, um ein Einfrieren der Flüssigkeit innerhalb der Leitung zu dem Verbraucher zu vermeiden.

Wie der in Figur 3 dargestellte Flüssigkeitsbehälter 1 kann der zweite Flüssigkeitsbehälter 11 ebenfalls mehrere dritte Filterelemente 12 umfassen, welche über Flüssigkeitsleitungen 5 mit einem zweiten Sammelpunkt 16 verbunden sind und wobei der zweite Sammelpunkt 16 über die Flüssigkeitsverbindungsleitung 13 mit der Flüssigkeitsfördereinheit 3 verbunden ist, wie in Figur 3 durch die gestrichelten Linien angedeutet.

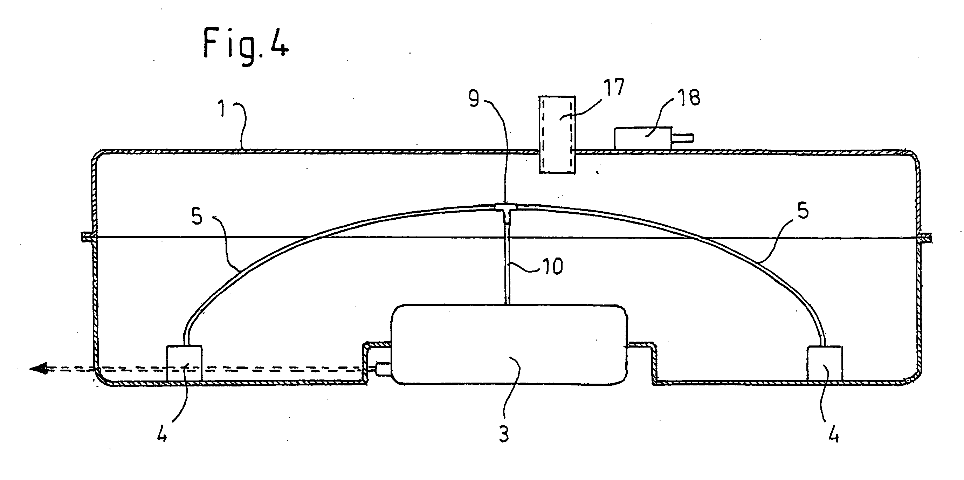

Figur 4 zeigt einen Flüssigkeitsbehälter 1, insbesondere für eine wässrige Harnstofflösung, umfassend eine Flüssigkeitsfördereinheit 3, vier in Einbaulage am Boden des Flüssigkeitsbehälters 1 angeordnete Filterelemente 4, wobei die ersten Filterelemente 4 jeweils über eine Flüssigkeitsleitung 5 mit einem Sammelpunkt 9 verbunden sind und der Sammelpunkt 9 über eine Flüssigkeitssammelleitung 10 mit der Flüssigkeitsfördereinheit 3 verbunden ist. Der Sammelpunkt 9 ist der in Einbaulage höchste Punkt in der Flüssigkeitsverbindung zwischen den ersten Filterelementen 4 und der Flüssigkeitsfördereinheit 3. Eine derartige Ausgestaltung hat den Vorteil, dass, sobald die Flüssigkeitsfördereinheit 3 Flüssigkeit über ein erstes Filterelement 4 die zugehörige Flüssigkeitsleitung 5 und die Flüssigkeitssammelleitung 10 fördert, der Flüssigkeitspegel in den anderen Flüssigkeitsleitungen 5 zu den anderen ersten Filterelementen 4 nicht durch einen Druckabfall sinkt, sondern gleichbleibend hoch bleibt. In dem Fall, dass über das erste Filterelement 4, welches zuerst die Flüssigkeit lieferte, keine Flüssigkeit mehr gefördert werden kann, so sind die anderen Flüssigkeitsleitungen 5 zu den anderen ersten Filterelementen 4 zumindest teilweise, vorzugsweise komplett, mit Flüssigkeit gefüllt und es kann ohne die Förderung von größeren Luftmengen Flüssigkeit an den Verbraucher geliefert werden.

Wie in Figur 3 dargestellt, kann der Flüssigkeitsbehälter 1 aus Figur 4 weiterhin einen außerhalb des Flüssigkeitsbehälters 1 angeordneten zweiten Flüssigkeitsbehälter 11 mit wenigstens einem in Einbaulage am Boden angeordneten dritten Filterelement 12 umfassen, wobei der zweite Flüssigkeitsbehälter 11 über das wenigstens eine dritte Filterelement 12 und eine Flüssigkeitsverbindungsleitung 13 mit der Flüssigkeitsfördereinheit 3 verbunden ist. Um eine Selektion zwischen dem Flüssigkeitsbehälter 1 und dem zweiten Flüssigkeitsbehälter 11 vorzunehmen, ist beispielsweise ein erstes Ventil 7 zwischen den ersten Filterelementen 4 und der Flüssigkeitsfördereinheit 3 und ein drittes Ventil 15 zwischen den dritten Filterelementen 12 und der Flüssigkeitsfördereinheit 3 vorgesehen, wobei der Öffnungsdruck des dritten Ventils 15 kleiner ist als der Öffnungsdruck des ersten Ventils 7,

Zwischen der Flüssigkeitsfördereinheit 3 und dem Innenraum des Zwischenspeichers 2 ist ein viertes Ventil 19 angeordnet, so dass die aus der Leitung zwischen Flüssigkeitsfördereinheit 3 und Verbraucher rückgespülte Flüssigkeit in den beheizten Zwischenspeicher 2 gelangt. Das vierte Ventil 19 kann auch so angeordnet sein, dass ein Rückspülen der Flüssigkeit über das zweite Filterelement 6 erfolgt.

Um eine vollkommene Restentleerung des Flüssigkeitsbehälters 1, des Zwischenspeichers 2 und/oder des zweiten Flüssigkeitsbehälters 11 zu gewährleisten, sind die ersten Filterelemente 4, die zweiten Filterelemente 6 bzw. die dritten Filterelemente 12 am Boden des jeweiligen Behälters angeordnet.

Je nach Einsatzgebiet kann ein erfindungsgemäßer Flüssigkeitsbehälter 1 einen Befüllstutzen 17 und/oder ein Ventilationselement 18 umfassen, wie in Figur 4 dargestellt.

Die in den Ausführungsbeispielen gemäß den Figuren 1 bis 4 verwendeten ersten Ventile 7, zweiten Ventile 14 und dritten Ventile 15 sind allesamt als Einwegeventil ausgebildet, beispielsweise in Form eines Rückschlagventils.

### Bezugszeichenliste:

- 1: Flüssigkeitsbehälter
- 2: Zwischenspeicher
- 3: Flüssigkeitsfördereinheit
- 4: erstes Filterelement
- 5: Flüssigkeitsleitung
- 6: zweites Filterelement
- 7: erstes Ventil
- 8: Heizelement
- 9: Sammelpunkt
- 10: Flüssigkeitssammelleitung
- 11: zweiter Flüssigkeitsbehälter
- 12: drittes Filterelement
- 13: Flüssigkeitsverbindungsleitung
- 14: zweites Ventil
- 15: drittes Ventil
- 16: zweiter Sammelpunkt
- 17: Befüllstutzen
- 18: Ventilationselement
- 19: viertes Ventil

## Patentansprüche

1. Flüssigkeitsbehälter (1), insbesondere für eine wässrige Harnstofflösung, umfassend:
eine Flüssigkeitsfördereinheit (3),
wenigstens zwei in Einbaulage am Boden des Flüssigkeitsbehälters (1) angeordnete erste Filterelemente (4),
wobei die ersten Filterelemente (4) jeweils über eine Flüssigkeitsleitung (5) mit einem Sammelpunkt (9) verbunden sind und der Sammelpunkt (9) über eine Flüssigkeitssammelleitung (10) mit der Flüssigkeitsfördereinheit (3) verbunden ist,
wobei
der Sammelpunkt (9) der in Einbaulage höchste Punkt in der Flüssigkeitsverbindung zwischen den ersten Filterelementen (4) und der Flüssigkeitsfördereinheit (3) ist,
**dadurch gekennzeichnet, dass**
der Flüssigkeitsbehälter (1) ferner einen außerhalb des Flüssigkeitsbehälters (1) angeordneten zweiten Flüssigkeitsbehälter (11) mit wenigstens einem in Einbaulage am Boden angeordneten dritten Filterelement (12) umfasst,
wobei der zweite Flüssigkeitsbehälter (11) über das wenigstens eine dritte Filterelement (12) und eine Flüssigkeitsverbindungsleitung (13) mit der Flüssigkeitsfördereinheit (3) verbunden ist.

2. Flüssigkeitsbehälter (1) nach Anspruch 1, weiterhin umfassend ein erstes Ventil (7) zwischen den ersten Filterelementen (4) und der Flüssigkeitsfördereinheit (3) und ein drittes Ventil (15) zwischen den dritten Filterelementen (12) und der Flüssigkeitsfördereinheit (3),
wobei der Öffnungsdruck des dritten Ventils (15) kleiner ist als der Öffnungsdruck des ersten Ventils (7).

3. Flüssigkeitsbehälter (1) nach Anspruch 1 oder 2, weiterhin umfassend ein viertes Ventil (19) zwischen der Flüssigkeitsfördereinheit (3) und dem Innenraum des Flüssigkeitsbehälters (1), vorzugsweise dem Innenraum des Zwischenspeichers (2).

4. Flüssigkeitsbehälter (1) nach einem der Ansprüche 1 bis 3, weiterhin umfassend einen zweiten Sammelpunkt (16) in dem zweiten Flüssigkeitsbehälter (11), vorzugsweise ist der zweite Sammelpunkt (16) der in Einbaulage höchste Punkt der Flüssigkeitsleitung innerhalb des zweiten Flüssigkeitsbehälters (11).

5. Flüssigkeitsbehälter (1) nach einem der Ansprüche 1 bis 4, wobei der zweite Flüssigkeitsbehälter (11) in Einbaulage oberhalb oder unterhalb des ersten Flüssigkeitsbehälter (1) angeordnet ist, wobei die Flüssigkeitsverbindungsleitung (13) vorzugsweise keine Flüssigkeitsfördereinheit (3) aufweist.

6. Flüssigkeitsbehälter (1) nach einem der Ansprüche 1 bis 5, wobei die ersten Filterelemente (4) und/oder die dritten Filterelemente (12) in Einbaulage an den niedrigsten Punkten des Flüssigkeitsbehälters (1) bzw. des zweiten Flüssigkeitsbehälters (11) angeordnet sind.

7. Flüssigkeitsbehälter (1) nach einem der Ansprüche 1 bis 6, wobei der Durchbrechdruck der ersten Filterelemente (4) und/oder der dritten Filterelemente (12) gleich groß ist.

8. Flüssigkeitsbehälter (1) nach einem der Ansprüche 1 bis 7, wobei der Flüssigkeitsbehälter (1, 11) im Blasformverfahren oder Spritzgussverfahren hergestellt ist.

## Claims

1. Liquid container (1), particularly for an aqueous urea solution, comprising:
a liquid supply unit (3),
at least two first filter elements (4) arranged in the fitted position on the bottom of the liquid container (1),
wherein the first filter elements (4) each by way of a liquid pipe (5) are connected to a collecting point (9) and the collecting point (9) via a liquid collection pipe (10) is connected to the liquid supply unit (3),
wherein the collection point (9) is the highest point in the installed position in the liquid connection between the first filter elements (4) and the liquid supply unit (3),
**characterised in that**
the liquid container (1) further comprises a second liquid container (11) arranged outside the liquid container (1) with at least one third filter element (12) arranged at the bottom in the fitting position,
wherein the second liquid container (11) is connected via the at least one third filter element (12) and a liquid connection pipe (13) to the liquid supply unit (3).

2. Liquid container (1) according to claim 1, further comprising an first valve (7) between the first filter element (4) and the liquid supply unit (3) and a third valve (15) between the third filter element (12) and the liquid supply unit (3), wherein the opening pressure of the third valve (15) is smaller than the opening pressure of the first valve (7).

3. Liquid container (1) according to claim 1 or 2, further comprising a fourth valve (19) between the liquid supply unit (3) and the interior of the liquid container (1), preferably the interior of the interim storage area (2).

4. Liquid container (1) according to any one of claims 1 to 3, further comprising a second collection point (16) in the second liquid container (11), preferably, the second collection point (16) is the highest point in the fitting position of the liquid pipe within the second liquid container (11).

5. Liquid container (1) according to any one of claims 1 to 4, wherein the second liquid container (11) is arranged in the installation position above or below the first liquid container (1), wherein the liquid connection pipe (13) preferably has no liquid supply unit (3).

6. Liquid container (1) according to any one of claims 1 to 5, wherein the first filter elements (4) and/or the third filter elements (12) in the fitting position are arranged at the lowest points of the liquid container (1) or the second the liquid container (11).

7. Liquid container (1) according to any one of claims 1 to 6, wherein the breaking pressure by the first filter element (4) and/or the third filter element (12) is equal.

8. Liquid container (1) according to any one of claims 1 to 7, wherein the liquid container (1, 11) is made by blow moulding or injection moulding.

## Revendications

1. Réservoir de liquide (1), en particulier pour une solution d'urée aqueuse, comportant :
une unité de transport de liquide (3),
au moins deux premiers éléments de filtrage (4), disposés, dans la position de montage, sur le fond du réservoir de liquide (1),
lesdits premiers éléments de filtrage (4) étant reliés chacun à un point de collecte (9) via une conduite de liquide (5), et ledit point de collecte (9) étant relié à l'unité de transport de liquide (3) via une conduite de collecte de liquide (10),
ledit point de collecte (9) étant, dans la position de montage, le plus haut point dans la liaison fluidique entre les premiers éléments de filtrage (4) et l'unité de transport de liquide (3),
**caractérisé en ce que**
le réservoir de liquide (1) comporte, en outre, un deuxième réservoir de liquide (11), disposé à l'extérieur du réservoir de liquide (1) et muni d'au moins un troisième élément de filtrage (12) disposé sur le fond dans la position de montage,
ledit deuxième réservoir de liquide (11) étant relié à l'unité de transport de liquide (3) via ledit au moins un troisième élément de filtrage (12) et une conduite de liaison fluidique (13).

2. Réservoir de liquide (1) selon la revendication 1, comportant en outre une première vanne (7) entre les premiers éléments de filtrage (4) et l'unité de transport de liquide (3), et une troisième vanne (15) entre les troisièmes éléments de filtrage (12) et l'unité de transport de liquide (3), la pression d'ouverture de la troisième vanne (15) étant inférieure à la pression d'ouverture de la première vanne (7).

3. Réservoir de liquide (1) selon la revendication 1 ou 2, comportant en outre une quatrième vanne (19) entre l'unité de transport de liquide (3) et le volume intérieur du réservoir de liquide (1), de préférence le volume intérieur du réservoir intermédiaire (2).

4. Réservoir de liquide (1) selon l'une quelconque des revendications 1 à 3, comportant en outre un deuxième point de collecte (16) dans le deuxième réservoir de liquide (11), de préférence le deuxième point de collecte (16) est, dans la position de montage, le point le plus haut de la conduite de liquide à l'intérieur du deuxième réservoir de liquide (11).

5. Réservoir de liquide (1) selon l'une quelconque des revendications 1 à 4, dans lequel le deuxième réservoir de liquide (11) est disposé, dans la position de montage, audessus ou au-dessous du premier réservoir de liquide (1), la conduite de liaison fluidique (13) ne comportant, de préférence, aucune unité de transport de liquide (3).

6. Réservoir de liquide (1) selon l'une quelconque des revendications 1 à 5, dans lequel les premiers éléments de filtrage (4) et/ou les troisièmes éléments de filtrage (12) sont disposés, dans la position de montage, aux points les plus bas du réservoir de liquide (1) ou du deuxième réservoir de liquide (11).

7. Réservoir de liquide (1) selon l'une quelconque des revendications 1 à 6, dans lequel la pression de franchissement des premiers éléments de filtrage (4) et/ou des troisièmes éléments de filtrage (12) a la même valeur.

8. Réservoir de liquide (1) selon l'une quelconque des revendications 1 à 7, dans lequel le réservoir de liquide (1, 11) a été réalisé par le procédé de formage par soufflage ou par le procédé de moulage par injection.
